# FASCICULE DE BREVET EUROPEEN

(11) **EP 3 172 177 B1**
(45) Date de publication et mention de la délivrance du brevet: **09.09.2020**
(21) Numéro de dépôt: 15759839.2
(22) Date de dépôt: 07.07.2015
(51) Int. Cl.: C04B 26/04, C04B 26/10, C04B 28/02, C04B 28/04, C04B 28/06, C04B 28/14, C04B 28/16, C04B 28/34, C04B 111/00, C04B 111/60

(54) **COMPOSITION DE MORTIER POUR ENDUIT OU REVETEMENT D'INTERIEUR**
MÖRTELZUSAMMENSETZUNG FÜR EINE INNENBESCHICHTUNG ODER -AUSKLEIDUNG
MORTAR COMPOSITION FOR AN INTERIOR COATING OR LINING

(30) Priorité: 24.07.2014 FR 1457165
(43) Date de publication de la demande: 31.05.2017
(73) Titulaire: SAINT-GOBAIN WEBER, 94370 Sucy-en-Brie (FR)
(72) Inventeur: MAIER, Wolfram, 79194 Gundelfingen (DE)
(74) Mandataire: Saint-Gobain Recherche
(86) Numéro de dépôt international: PCT/FR2015/051878
(87) Numéro de publication internationale: WO 2016/012686

(56) Documents cités:
- EP-A1- 1 790 625
- WO-A1-2012/087264
- GB-A- 2 170 495
- JP-A- 2007 297 535

## Description

La présente invention porte sur une composition de mortiers sèche ou en pâte pour enduit ou revêtement d'intérieur possédant des propriétés de purificateur de l'air ambiant.

L'air à l'intérieur des bâtiments est un mélange de polluants physiques, chimiques et/ou biologiques qui peuvent avoir différentes origines. Les matériaux de construction, produits de finition utilisés et le mobilier sont notamment à l'origine des émissions de composés organiques volatils (COV) tels que par exemple les hydrocarbures éventuellement halogénés, les alcools, les acides organiques, les esters ou les aldéhydes, comme le formaldéhyde, acét al déhyde, l'hexanal ... Les COV possèdent une tension de vapeur à température ambiante suffisamment élevée et ils peuvent donc être presque totalement à l'état de vapeur dans l'air ambiant. Ils peuvent être émis de ces matériaux ou produits pendant des durées plus ou moins longues, qui vont de plusieurs jours à plusieurs années selon la nature et le type de matériau ou produit dont ils sont issus. Les panneaux de particules, bois agglomérés ou contre-plaqués, textiles utilisés pour le mobilier ou la décoration, revêtements de murs ou de sols synthétiques ou préfabriqués, vernis, colles... sont connus pour émettre du formaldéhyde. Il est recommandé par exemple d'aérer de façon importante les pièces pendant ou après l'utilisation de ces produits. La réglementation en matière de protection contre les émissions indésirables de produits pouvant présenter des risques pour la santé devient de plus en plus stricte et impose de réduire le plus possible l'émission des polluants. Dans ce but, il est possible parfois d'agir à la source en évitant leur production. Dans certains cas, ceci n'est pas possible et il est alors nécessaire d'agir après la formation des polluants, soit par des techniques destructives telles que les procédés d'oxydation, d'irradiation ou les procédés biologiques soit par des techniques récupératives comme l'adsorption, la condensation, les procédés membranaires ou l'absorption. Les matériaux de construction possédant des fonctions de purificateurs d'air utilisés jusqu'à présent utilisent principalement ces deux types de technologies: on citera par exemple l'oxydation photocatalytique avec des particules d'oxyde de titane qui peuvent être incorporées dans des compositions de mortiers, ou l'utilisation d'adsorbants ou chimisorbants, capables de piéger les COV et notamment les aldéhydes. L'inconvénient des procédés mettant en jeu l'oxydation catalytique est principalement la nécessité d'avoir une source de lumière adéquate dans la pièce pour que le processus se fasse efficacement. En ce qui concerne les procédés utilisant des agents adsorbants, il est notamment connu de déposer sur le support une composition qui forme un film qui contient un agent apte à réagir avec le formaldéhyde et par conséquent à le piéger. Parmi ces composés susceptibles de piéger les aldéhydes, on peut citer les composés à méthylènes actifs, les tannins, les amides, les hydrazides. Toutefois, il est indispensable lorsque ces composés sont utilisés sur des revêtements décoratifs qu'ils n'aient aucun impact négatif sur l'aspect esthétique du revêtement. L'agent apte à piéger les aldéhydes ne doit pas laisser de traces ni provoquer de décoloration de la surface sur laquelle il est placé. D'autre part, cet agent ne doit pas dégager d'odeurs nauséabondes, ni provoquer des émissions qui seraient opposées à l'effet recherché. Il doit par conséquent rester stable dans les conditions d'utilisation du matériau dans lequel il est incorporé ou sur lequel il est déposé.

Des agents piégeurs de formaldéhyde couramment utilisés appartiennent à la famille des acétoacétamides. Lorsque de tels composés sont introduits dans des matrices cimentaires pour enduits de finition, une forte odeur d'ammoniac due à l'hydrolyse de l'amide en conditions alcalines est détectée après quelques jours dans la pièce. Ce type de composés ne peut donc pas être utilisé pour l'application recherchée. Cette odeur disparait si on utilise l'agent piégeur à base d'acétoamide dans des conditions de pH neutre, par exemple dans un enduit à base de plâtre. En revanche, même dans ces conditions, on note après quelques jours une décoloration jaune-brune sur la surface de l'enduit, ce qui n'est pas acceptable au niveau de l'aspect esthétique.

Il est donc nécessaire d'utiliser d'autres types d'agents susceptibles de piéger les aldéhydes qui ne présentent pas les inconvénients précités pour des utilisations dans des mortiers alcalins et/ou décoratifs. C'est dans ce cadre que s'inscrit la présente invention.

EP 1790625 décrit une composition de fluidifiant comprenant un aminoalcool choisi parmi le 2-amino-2-méthvl-1-propanol et le N-aminopropylmonométhyléthanolamine destinée à être ajoutée à une composition à durcissement hydraulique permettant de prévenir la corrosion de l'acier, notamment l'acier des coffrages en acier utilisés pour la fabrication d'éléments en béton préfabriqués ou les armature en acier des constructions en béton armé.

La présente invention porte sur l'utilisation d'un revêtement intérieur pour sols, parois murales et/ou plafonds telle que définie à la revendication 1. Le revêtement est obtenu à partir d'une composition de mortier sèche ou en pâte pour enduit ou revêtement d'intérieur comprenant au moins un liant, au moins des granulats, agrégats, sables et/ou fillers et au moins un additif, un desdits additifs étant un agent sous forme de poudre, susceptible de piéger des aldéhydes, et choisi parmi les aminoalcools. Cet additif est également appelé agent dépolluant. Il est directement incorporé dans la composition de mortier, sans modifier les propriétés physiques et mécaniques telles que le temps de prise ou la résistance mécanique du mortier.

La composition de mortier peut se présenter sous forme pulvérulente et on parle alors de composition sèche. Elle peut également se présenter sous la forme d'une dispersion et on parlera alors d'une composition de mortier en pâte.

L'agent dépolluant est un aminoalcool primaire de formule R₁R₂R₃-C-NH₂, dans lequel R₁, R₂ et R₃ sont des groupements alkyles comprenant de 1 à 6 atomes de carbone (C1-C6), des atomes d'hydrogène ou des groupements hydroxyles -OH, au moins un des groupements R₁, R₂ ou R₃ comprenant un groupement hydroxyle.

De façon préférée, l'agent dépolluant comprend au moins deux groupements hydroxyles. Préférentiellement, l'agent dépolluant est choisi parmi, le 2-amino-2-méthyl-1,3-propanediol, le 2-amino-2(hydroxyméthyl)propane 1,3 diol (ou encore appelé tris(hydroxyméthyl)-aminométhane) et le 2-amino-2-éthyl-1,3-propanediol. De façon très préférée, l'agent dépolluant est le 2-amino-2(hydroxyméthyl)propane 1,3 diol qui comprend trois groupements hydroxyles.

L'agent dépolluant a une capacité d'absorption telle qu'il permet d'absorber les aldéhydes présents dans une pièce et par conséquent de purifier l'air intérieur. Les aldéhydes qui sont absorbés par l'agent dépolluant sont le formaldéhyde, l'acétaldéhyde, le propionaldéhyde, le cronotaldéhyde, le butyraldéhyde, le benzaldéhyde, le valéraldéhyde ou l'héxaldéhyde.

La composition de mortier comprend au moins un liant, minéral ou organique, qui peut être un liant hydraulique, une source de sulfate de calcium, un liant phosphomagnésien, de la chaux et/ou des dispersions de polymères ou des poudres redispersibles.

Le liant minéral est choisi parmi les liants hydrauliques, les sources de sulfate de calcium, la chaux et/ou les liants phosphomagnésiens. Parmi les liants hydrauliques, on peut citer les ciments Portland, les ciments alumineux, les ciments sulfoalumineux, les ciments bélitiques, les laitiers de haut fourneau, les ciments de mélange pouzzolaniques comprenant éventuellement des cendres volantes, des fumées de silice, du calcaire, du schiste calciné et/ ou des pouzzolanes naturelles ou calcinées. Il est possible d'utiliser dans la composition de mortier ce type de liant, seul ou en mélange. Parmi les sources de sulfate de calcium, on peut citer le plâtre ou hémihydrate, le gypse et/ou l'anhydrite.

Lorsque le liant est organique, il est choisi parmi les dispersions de polymères ou les poudres redispersibles. On peut citer les polymères ou co-polymères acryliques et/ou vinyliques, les copolymères de styrène et de butadiène, les copolymères de styrène et d'acide acrylique, les copolymères d'acétate de vinyle et d'éthylene, les copolymères d'acétate de vinyle et de versatate de vinyle, et leurs dérivés.

La quantité de liant, minéral ou organique, représente entre 1 et 95 % en poids de la quantité totale des différents constituants de la composition de mortier sèche ou en pâte.

La composition de mortier sèche ou en pâte contient des granulats, agrégats, sables, et/ou fillers calcaires et/ou silicieux. Ces composés jouent notamment sur la rhéologie, la dureté ou l'aspect final du produit. Leur teneur est généralement comprise entre 1 et 95% poids par rapport au poids total de la composition.

La composition de mortier sèche ou en pâte comprend avantageusement, en plus de l'agent dépolluant, des additifs qui sont des agents rhéologiques tels que les plastifiants ou les superplastifiants, des agents rétenteurs d'eau, des agents épaississants, des agents de protection biocides, des agents dispersants, des agents hydrofuges de masse, des pigments, des accélérateurs et/ou retardateurs, et d'autres agents permettant d'améliorer la prise, le durcissement et/ou la stabilité du mortier ou béton après application, d'ajuster la couleur, la maniabilité, la mise en œuvre ou l'imperméabilité. La teneur totale en additifs varie entre 0,001% et 5%en poids par rapport au mélange total des constituants de la composition de mortier.

Il est également décrit un procédé de préparation de la composition de mortier sèche ou en pâte décrite ci-dessus. Selon un mode de réalisation, l'agent dépolluant susceptible de piéger les aldéhydes est directement mélangé avec le liant, les granulats, agrégats, sables et/ou fillers et éventuels autres additifs lors de la préparation de la composition de mortier. Il est également possible d'ajouter l'agent dépolluant directement dans une composition de mortier déjà préparée comprenant au moins un liant, au moins des granulats, agrégats, sables et/ou fillers et des éventuels additifs. Cet ajout peut être réalisé avant ou au moment du gâchage de la composition de mortier avec de l'eau dans le cas d'une composition sèche. Un des avantages de l'agent dépolluant utilisé dans les compositions de mortier est notamment qu'il se présente sous forme de poudre, ce qui lui permet d'être incorporé au même titre que d'autres constituants de la composition de mortier.

Le revêtement d'intérieur pour sols, parois murales et/ou plafonds est obtenu à partir d'une composition de mortier sèche gâchée avec de l'eau ou une composition de mortier en pâte puis durcie. Un tel revêtement contient entre 5 et 50g/ m² d'agent dépolluant susceptible de piéger les aldéhydes et choisi parmi les aminoalcools comme décrit ci-avant.

Le revêtement selon la présente invention permet d'absorber et par conséquent de dépolluer pendant plusieurs années une pièce dans laquelle il est déposé. Sa durée de fonctionnement est donc tout à fait compatible avec une utilisation habituelle d'un revêtement d'intérieur, puisqu'elle est de plusieurs années. L'invention porte sur l'utilisation d'un tel revêtement pour réduire la quantité d'aldéhydes dans l'air intérieur d'un bâtiment. Le revêtement selon la présente invention est suffisamment poreux pour que les polluants contenus dans l'air ambiant puissent être captés directement par l'agent dépolluant piégeur contenu dans la composition de mortier utilisée pour préparer ledit revêtement.

De façon très avantageuse, les produits obtenus à partir de la composition de mortier sèche ou en pâte selon la présente invention n'ont pas d'odeur d'ammoniac.

Les exemples ci-après illustrent l'invention sans en limiter la portée.

### Exemple 1 : Enduit intérieur à base de ciment comprenant du tris(hydroxyméthyl)-aminométhane piégant les formaldéhydes.

On ajoute 1% en poids de tris(hydroxyméthyl)-aminométhane à un enduit intérieur à base de ciment commercialement disponible sous le nom Weber.star 220.
Les performances d'élimination de polluants du type formaldéhyde contenus dans une phase gazeuse avec cette composition selon l'invention sont mesurées et sont comparées avec une composition d'enduit intérieur du même type (Weber.Star 220) sans additif susceptible de piéger les formaldéhydes. Une chambre de test vide, sans échantillon d'enduit a également été testée, à titre d'étalonnage.

Les différents échantillons sont testés suivant la méthode décrite dans la norme ISO 16000-23, avec les conditions suivantes et dans trois chambres de test en parallèle :
- le polluant est injecté à l'entrée de chacune des chambres comprenant chaque échantillon, à une concentration d'environ 90 ppbv (partie par milliard, en volume)
- l'humidité relative de la chambre de test est de 49%
- la température de la chambre de test est de 23°C,
- le débit d'air comprenant le polluant est de 1,6 l/min,
- la surface de chaque échantillon est de 0,2 m² (chaque chambre comprend deux morceaux de 380 mm∗270 mm chacun)
- le volume de la chambre est de 28,2 l.

Chaque test consiste à placer chacun des échantillons d'enduit dans une chambre, à envoyer de façon continue un flux d'air pollué par des formaldéhydes à travers la chambre, de façon à ce que la surface de l'échantillon soit balayée en continu par un flux d'air pollué et à mesurer en sortie de la chambre la concentration en formaldéhyde présent dans l'air sortant. La circulation d'air pollué à travers la chambre est maintenue pendant 320 heures.

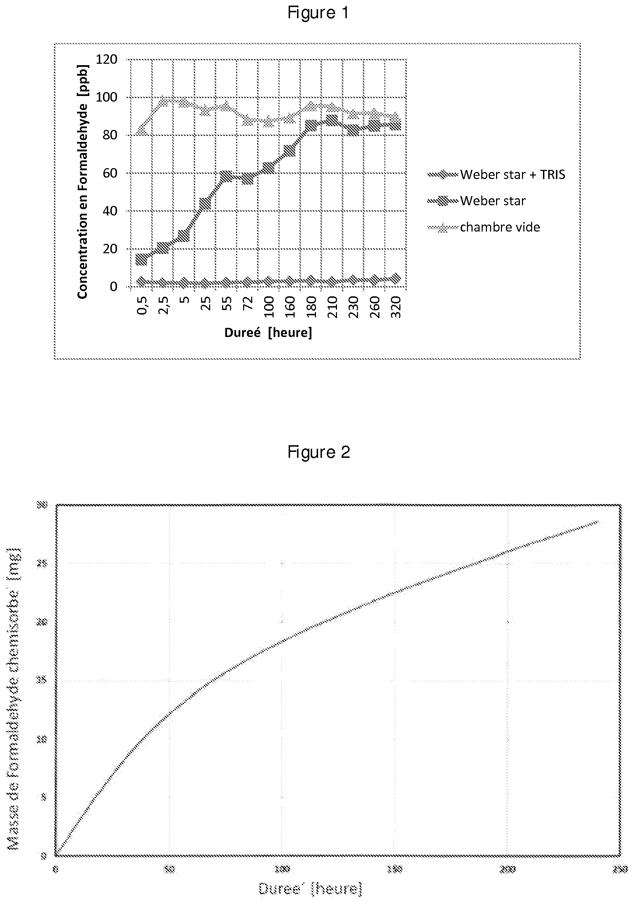

La figure 1 représente l'évolution de la concentration en formaldéhyde dans l'air sortant de la chambre en fonction du temps pour les différents échantillons testés.
Comme prévu, l'air sortant de la chambre sans échantillon d'enduit (courbe représentée par les symboles en forme de triangles) n'évolue pas dans le temps: la concentration en formaldéhyde reste stable (environ 90 ppbv). Dans la chambre comprenant l'enduit intérieur Weber.star 220, sans additif susceptible de piéger les polluants (courbe représentée par les symboles en forme de carrés), la concentration en formaldéhyde augmente régulièrement pour atteindre le niveau de polluant compris dans l'air entrant après environ 180 minutes. Au démarrage du test, la concentration en formaldéhyde est relativement faible (moins de 20 ppbv) ce qui peut s'expliquer par une absorption physique du polluant dans les pores de la matrice d'enduit.
On note en revanche que la concentration en formaldéhyde reste stable et inférieure à 5 ppbv pendant toute la durée du test dans la chambre qui comprend l'échantillon selon la présente invention, c'est-à-dire l'échantillon de Weber.star 220 comprenant 1% en poids de tris(hydroxyméthyl)-aminométhane (courbe représentée par les symboles en forme de losange). L'enduit obtenu à partir de la composition de mortier comprenant l'agent piégeur de formaldéhyde est par conséquent suffisamment réactif pour éliminer la totalité du polluant introduite pendant toute la durée du test.

### Exemple 2 : Détermination de la capacité de sorption de formaldéhyde d'un enduit intérieur à base de ciment comprenant 1% d'agent susceptible de piéger le formaldéhyde.

Des tests ont été réalisés pour déterminer la capacité de sorption d'un enduit intérieur commercialisé sous le nom Weber.star 220, auquel on a ajouté 1%en poids de tris(hydroxyméthyl)-aminométhane, comme décrit dans la norme ISO 16000-23.
L'enduit une fois durci a été broyé manuellement dans un mortier et a été tamisé. Les fractions d'une taille comprise entre 1 et 4 mm ont été placées dans un tube en verre d'un diamètre intérieur de 20 mm, pour remplir 123 mm dans le tube. La quantité de matière broyée dans le tube en verre est de 34,99 g. Un flux d'air pollué par des formaldéhydes est envoyé dans le tube comprenant l'échantillon et en parallèle dans un tube témoin sans échantillon, avec un débit de 1,6 l/min. La concentration en formaldéhyde dans l'air entrant dans les tubes est d'environ 2000 ppbv. Les tests sont effectués à une température de 23°C. Les concentrations en formaldéhydes sont mesurées dans le flux d'air sortant de chacun de ces tubes, de façon continue.

La figure 2 représente la quantité de formaldéhyde absorbée en fonction du temps. Le test a été arrêté après 240 heures (soit 10 jours), alors que la capacité maximale de sorption de l'échantillon d'enduit testé n'était toujours pas atteinte. Au moment de l'arrêt, la quantité d'enduit introduite (soit 34,99 g) avait piégé 28,6 mg de formaldéhyde.
Par conséquent, 1 g d'enduit selon la présente invention, soit comprenant 1% en poids de tris(hydroxyméthyl)-aminométhane peut piéger au moins 0,82 mg de formaldéhyde.

### Exemple 3 : Estimation de la performance à long terme d'un enduit comprenant 1%en poids de tris(hydroxyméthyl)-aminométhane

A partir des tests réalisés à l'exemple 2 qui permettent de déduire que la capacité de sorption est d'au moins 0,82 mg de formaldéhyde par gramme d'enduit, du fait qu'on utilise 3 kg d'enduit par m², des paramètres utilisés dans le modèle de pièce témoin AgBB (l'abréviation AgBB correspondant à « Ausschuss zur gesundheitlichen Bewertung von Bauprodukten » qui est un comité allemand représentant les autorités allemandes de santé publique en charge des émissions de VOC dans les matériaux de construction), et en considérant une concentration en formaldéhyde à l'état d'équilibre de 50 µg/m³ (ce qui signifie qu'il y a en permanence 1,5 mg de formaldéhyde dans la pièce), on peut déterminer que l'enduit dans cette pièce permet de piéger la quantité totale de formaldéhydes émis pendant une durée d'au moins 16 ans.

Pour effectuer ce calcul, les données suivantes ont été utilisées :
- capacité de sorption de formaldéhyde de l'enduit : au moins 0,82 mg par gramme d'enduit
- surface revêtue de l'enduit : 43,4 m²
- consommation d'enduit : 3 kg/ m²
- quantité d'enduit dans la pièce : 130,2 kg
- volume de la pièce : 30 m³
- débit d'air échangé dans la pièce : 0,5 l/h

### Exemple 4 : Evaluation de la décoloration

Un enduit intérieur de finition à base de plâtre comprenant 30 % en poids d'hémihydrate CaSO₄, 69 %en poids de sable calcaire et soit 1 %en poids de tris(hydroxymethyl)aminométhane soit 1 % en poids d'acétoacétamide est mélangé avec 25 % poids d'eau et est appliqué sur une épaisseur de 2 mm sur une plaque en fibrociment. Un échantillon témoin sans aucun agent piégeur et avec le même enduit intérieur à base de plâtre est également préparé de la même façon. Le degré de décoloration (jaunissement) est évalué en mesurant les paramètres colorimétriques L*, a*, b* avec un spectrophotomètre CM-3610d de la marque Konica Minolta (illuminant D65 dans le système CIE Lab 1976) après stockage en intérieur dans des conditions ambiantes pendant 1 jour, 20 jours et 40 jours.

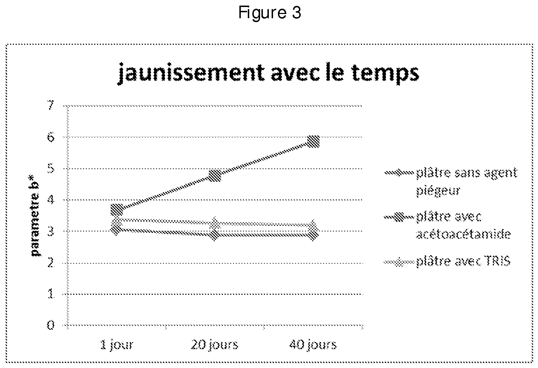

Comme on peut le constater dans le tableau 1 et sur la figure 3 qui représente l'évolution du paramètre b* en fonction du temps pour les différents échantillons testés, la couleur reste stable pour l'échantillon témoin qui ne contient pas d'agent piégeur et pour l'échantillon qui contient le tris(hydroxyméthyl)aminométhane. En revanche, l'échantillon qui comprend 1 %en poids d'acétoacétamide comme agent piégeur a tendance à jaunir avec le temps.

**Tableau 1**

| | L*, a*, b* Après 1 jour | L*, a*, b* Après 20 jours | L*, a*, b* Après 40 jours |
|---|---|---|---|
| Echantillon témoin sans agent piégeur | 90,14 | 89,58 | 89,24 |
| | 0,3 | 0,25 | 0,27 |
| | 3,06 | 2,88 | 2,88 |
| Echantillon comprenant 1 %poids d'acétoacétamide | 89,23 | 89,06 | 88,37 |
| | 0,23 | -0,06 | -0,19 |
| | 3,68 | 4,77 | 5,87 |
| Echantillon comprenant 1 %poids de tris(hydroxymethyl)aminométhane | 89,12 | 89,17 | 89,37 |
| | 0,33 | 0,29 | 0,26 |
| | 3,37 | 3,27 | 3,2 |

### Exemple 5 : Emissions d'ammoniac

Un échantillon d'un enduit intérieur à base de ciment commercialement disponible sous le nom Weber.star 220 est mélangé soit avec 1 %en poids de tris(hydroxymethyl)aminométhane soit avec 1 %en poids d'acétoacétamide et avec de l'eau.
100g de chacun des échantillons frais sont placés dans des dessicateurs fermés. Après 24 heures, la concentration an ammoniac dans l'air à l'intérieur du dessicateur est mesurée avec des tubes Draeger détecteur d'ammoniac 5/ a, et avec une pompe Draeger Accuro. Les mesures réalisées ont montré que l'air du dessicateur dans lequel l'échantillon comprenant comme agent piégeur l'acétoacétamide contenait 40 ppm d'ammoniac. Aucune trace d'ammoniac n'a été détectée dans l'air du dessicateur qui contenait l'échantillon d'enduit avec le tris(hydroxyméthyl)aminométhane.

## Revendications

1. Utilisation d'un revêtement d'intérieur pour sols, parois murales et/ou plafonds obtenu à partir d'une composition de mortier sèche ou en pâte comprenant au moins un liant, au moins des granulats, agrégats, sables et/ou des fillers calcaires et/ou silicieux et au moins un additif **caractérisée en ce qu'**au moins un additif est un agent sous forme de poudre susceptible de piéger des aldéhydes choisi parmi les aminoalcools primaires de formule R₁R₂R₃-C-NH₂, dans lequel R₁, R₂ et R₃ sont des groupements alkyles comprenant de 1 à 6 atomes de carbone, des atomes d'hydrogène ou des groupements hydroxyles -OH, au moins un des groupements R₁, R₂ ou R₃ comprenant un groupement hydroxyle, pour dépolluer une pièce dans laquelle il est déposé, et **en ce que** le revêtement contient entre 5 et 50g/m² d'agent susceptible de piéger les aldéhydes choisi parmi les aminoalcools.

2. Utilisation selon la revendication 1 **caractérisé en ce que** ledit agent comprend au moins deux groupements hydroxyles.

3. Utilisation selon la revendication 2 **caractérisé en ce que** ledit agent est choisi parmi, le 2-amino-2-méthyl-1,3-propanediol, le 2-amino-2(hydroxyméthyl)propane 1,3 diol, le 2-amino-2-éthyl-1,3-propanediol.

4. Utilisation selon l'une des revendications précédentes **caractérisée en ce que** le liant est choisi parmi:
- un liant hydraulique choisi parmi les ciments Portland, les ciments alumineux, les ciments sulfoalumineux, les ciments bélitiques, les laitiers de haut fourneau, les ciments de mélange pouzzolaniques comprenant éventuellement des cendres volantes, des fumées de silice, du calcaire, du schiste calciné et/ou des pouzzolanes naturelles ou calcinées, seuls ou en mélange,
- une source de sulfate de calcium choisi parmi le plâtre ou hémihydrate, le gypse et/ou l'anhydrite,
- de la chaux,
- les liants phosphomagnésiens et/ou
- un liant organique choisi parmi les dispersions de polymères ou les poudres redispersiblesles telles que les polymères ou co-polymères acryliques et/ou vinyliques, les copolymères de styrène et de butadiène, les copolymères de styrène et d'acide acrylique, les copolymères d'acétate de vinyle et d'éthylene, les copolymères d'acétate de vinyle et de versatate de vinyle, et leurs dérivés,
la teneur en liant représentant entre 1 et 95% en poids du mélange total des constituants.

5. Utilisation selon l'une des revendications précédentes **caractérisée en ce que** la composition comprend en outre des additifs qui sont des agents rhéologiques tels que les plastifiants ou les superplastifiants, des agents rétenteurs d'eau, des agents épaississants, des agents de protection biocides, des agents dispersants, des agents hydrofuges de masse, des pigments, des accélérateurs et/ou retardateurs, et d'autres agents permettant d'améliorer la prise, le durcissement et/ou la stabilité du mortier ou béton après application, d'ajuster la couleur, la maniabilité, la mise en oeuvre ou l'imperméabilité, la teneur totale en additifs variant entre 0,001% et 5% en poids par rapport au mélange total des constituants.

6. Utilisation selon l'une des revendications précédentes **caractérisée en ce que** l'aldéhyde est choisi parmi le formaldéhyde, l'acétaldéhyde, le propionaldéhyde, le cronotaldéhyde, le butyraldéhyde, le benzaldéhyde, le valéraldéhyde et l'héxaldéhyde.

## Patentansprüche

1. Verwendung einer Innenbeschichtung für Fußböden, Wände und/oder Decken, die aus einer trockenen oder pastösen Mörtelzusammensetzung erhalten wird, die mindestens ein Bindemittel, mindestens Granulate, Aggregate, Sande und/oder Kalkstein- und/oder Siliciumdioxidfüllstoffe und mindestens ein Additiv umfasst, **dadurch gekennzeichnet, dass** mindestens ein Additiv ein Mittel in Form eines Pulvers ist, das in der Lage ist, Aldehyde einzufangen , ausgewählt aus den primären Aminoalkoholen der Formel R₁R₂R₃-C-NH₂, wobei R₁, R₂ und R₃ Alkylgruppen sind, die 1 bis 6 Kohlenstoffatome, Wasserstoffatome oder Hydroxylgruppen -OH umfassen, wobei mindestens eine der Gruppen R₁, R₂ oder R₃ eine Hydroxylgruppe umfasst, um einen Raum zu reinigen, in dem sie abgelagert ist, und wobei die Beschichtung zwischen 5 und 50 g/m² Mittel enthält, das in der Lage ist, die aus Aminoalkoholen ausgewählten Aldehyde einzufangen.

2. Verwendung nach Anspruch 1, **dadurch gekennzeichnet, dass** das Mittel mindestens zwei Hydroxylgruppen umfasst.

3. Verwendung nach Anspruch 2, **dadurch gekennzeichnet, dass** das Mittel ausgewählt ist aus 2-amino-2-methyl-1,3-propandiol, 2-amino-2(hydroxymethyl)propan 1,3 diol, 2-amino-2-ethyl-1,3-propandiol.

4. Verwendung nach einem der vorangehenden Ansprüche, **dadurch gekennzeichnet, dass** das Bindemittel ausgewählt ist aus:
- einem hydraulischen Bindemittel, ausgewählt aus den Portlandzementen, den Tonerdezementen, den Sulfoaluminatzementen, den Belitzementen, den Hochofenschlacken, den Puzzolanmischzementen, umfassend eventuell Flugaschen, Silikastäube, Kalk, gebrannten Schiefer und/oder natürliche oder gebrannte Puzzolane, allein oder im Gemisch,
- einer Calciumsulfatquelle, ausgewählt aus Baugips oder Hemihydrat, Mineralgips und/oder Anhydrit,
- Kalk,
- Phosphomagnesiumbindemittel und/oder
- einem organischen Bindemittel, ausgewählt aus Polymerdispersionen oder redispergierbaren Pulvern wie Acryl- und/oder Vinylpolymeren oder -copolymeren, Styrol- und Butadiencopolymeren, Styrol- und Acrylsäurecopolymeren, Copolymeren von Vinyl- und Ethylenacetat, Copolymeren von Vinylacetat und Vinylversatat und deren Derivaten,
wobei der Gehalt an Bindemittel zwischen 1 und 95 Gew.-% des Gesamtgemischs der Bestandteile darstellt.

5. Verwendung nach einem der vorhergehenden Ansprüche, **dadurch gekennzeichnet, dass** die Zusammensetzung ferner Additive umfasst, die rheologische Mittel wie Weichmacher oder Superplastifizierungsmittel, Wasserrückhaltemittel, Verdickungsmittel, Biozidschutzmittel, Dispergiermittel, wasserabweisende Mittel, Pigmente, Beschleuniger und/oder Verzögerer und andere Mittel zur Verbesserung der Abbindung, Härtung und/oder Stabilität des Mörtels oder Betons nach dem Auftragen, zum Anpassen der Farbe, der Verarbeitbarkeit, der Implementierung oder der Undurchlässigkeit sind, wobei ihr Gesamtgehalt an Additiven zwischen 0,001 und 5 Gew.-% im Verhältnis zum Gesamtgemisch der Bestandteile variiert.

6. Verwendung nach einem der vorhergehenden Ansprüche, **dadurch gekennzeichnet, dass** das Aldehyd ausgewählt ist aus Formaldehyd, Acetaldehyd, Propionaldehyd, Cronotaldehyd, Butyraldehyd, Benzaldehyd, Valeraldehyd und Hexaldehyd.

## Claims

1. Use of an interior coating for floors, walls and/or ceilings obtained from dry or pasty mortar composition comprising at least one binder, at least aggregates, sands and/or calcareous and/or siliceous fillers and at least one additive, **characterized in that** at least one additive is an agent in powder form capable of scavenging aldehydes selected from primary aminoalcohols of formula R₁R₂R₃-C-NH₂, wherein R₁, R₂ and R₃ are alkyl groups comprising from 1 to 6 carbon atoms, hydrogen atoms or -OH hydroxyl groups, at least one of the R₁, R₂ or R₃ groups comprising a hydroxyl group, for depolluting a room in which it is deposited, and **in that** the coating contains between 5 and 50 g/m² of agent capable of scavenging the aldehydes selected from aminoalcohols.

2. The use as claimed in claim 1, **characterized in that** said agent comprises at least two hydroxyl groups.

3. The use as claimed in claim 2, **characterized in that** said agent is selected from 2-amino-2-methyl-1,3-propanediol, 2-amino-2(hydroxymethyl)propane-1,3-diol and 2-amino-2-ethyl-1,3-propanediol.

4. The use as claimed in one of the preceding claims, **characterized in that** the binder is selected from:
- a hydraulic binder selected from Portland cements, high-alumina cements, sulfoaluminate cements, belite cements, blast-furnace slags, cements of pozzolanic mixtures optionally comprising fly ash, silica fumes, limestone, calcined schist and/or natural or calcined pozzolans, alone or as a mixture,
- a source of calcium sulfate selected from calcined gypsum or hemihydrate, gypsum and/or anhydrite,
- lime,
- phosphomagnesium binders and/or
- an organic binder selected from polymer dispersions or redispersible powders such as acrylic and/or vinyl polymers or copolymers, copolymers of styrene and butadiene, copolymers of styrene and acrylic acid, copolymers of vinyl acetate and ethylene, copolymers of vinyl acetate and vinyl versatate, and derivatives thereof,
the binder content representing between 1% and 95% by weight of the total mixture of the constituents.

5. The use as claimed in one of the preceding claims, **characterized in that** it additionally comprises additives which are rheological agents such as plasticizers or superplasticizers, water-retaining agents, thickeners, biocidal protective agents, dispersants, mass water-repellent agents, pigments, accelerators and/or retarders, and other agents that make it possible to improve the setting, the hardening and/or the stability of the mortar or concrete after application, to adjust the color, workability, implementation or impermeability, the total content of additives varying between 0.001% and 5% by weight relative to the total mixture of the constituents.

6. The use as claimed in one of the preceding claims, **characterized in that** the aldehyde is selected from formaldehyde, acetaldehyde, propionaldehyde, cronotaldehyde, butyraldehyde, benzaldehyde, valeraldehyde or hexaldehyde.
